# EUROPÄISCHE PATENTSCHRIFT

(11) **EP 3 390 148 B1**
(45) Veröffentlichungstag und Bekanntmachung des Hinweises auf die Patenterteilung: **27.11.2019**
(21) Anmeldenummer: 16819490.0
(22) Anmeldetag: 14.12.2016
(51) Int. Cl.: B60P 7/13, B60P 1/02, B60P 1/64

(54) **TRANSPORTFAHRZEUG FÜR CONTAINER**
TRANSPORT VEHICLE FOR CONTAINERS
VÉHICULE DE TRANSPORT POUR CONTENEURS

(30) Priorität: 15.12.2015 DE 102015121846
(43) Veröffentlichungstag der Anmeldung: 24.10.2018
(73) Patentinhaber: Konecranes Global Corporation, 05830 Hyvinkää (FI)
(72) Erfinder: HEGEWALD, Mike, 40597 Düsseldorf (DE); MOUTSOKAPAS, Jannis, 40789 Monheim (DE)
(74) Vertreter: Moser Götze & Partner Patentanwälte mbB
(86) Internationale Anmeldenummer: PCT/EP2016/081041
(87) Internationale Veröffentlichungsnummer: WO 2017/102865

(56) Entgegenhaltungen:
- DE-A1-102007 039 778
- DE-A1-102013 114 841
- US-A- 5 017 066

## Beschreibung

Die Erfindung betrifft ein Transportfahrzeug für Container, mit einer ersten Abstellfläche, auf der ein Container abstellbar ist, und mit zwei sich gegenüberliegenden Führungsflächen, die in Richtung der ersten Abstellfläche aufeinander zu gerichtet verlaufen, um einen Container beim Abstellen auf dem Transportfahrtzeug in Richtung der ersten Abstellfläche zu führen, wobei die erste Abstellfläche zwischen den Führungsflächen angeordnet ist, und wobei zwischen den Führungsflächen eine heb- und senkbare Hubplattform angeordnet ist.

Typisches Einsatzgebiet derartiger Transportfahrzeuge sind Umschlaganlagen für Container und hierbei insbesondere der Transport von Containern innerhalb von Container-Terminals in See- oder Binnenhäfen sowie in Container-Terminals für den kombinierten Verkehr zwischen Straße und Schiene.

Als Container werden in diesem Zusammenhang ISO-Container im Sinne genormter Großraum- beziehungsweise Seefrachtbehälter mit genormten Aufnahmepunkten oder Eckbeschlägen für Lastaufnahmemittel verstanden, die im internationalen Warenverkehr zum Einsatz kommen. Am weitesten verbreitet sind ISO-Container mit einer Standard-Breite von 8 Fuß beziehungsweise 2438 mm und einer Länge von 20, 40 oder 45 Fuß.

Darüber hinaus sollen auch als Pallet-Wide- oder Wide-Body-Container bezeichnete Container umfasst sein, die eine Breite von mehr als 2438 mm, insbesondere von etwa 2500 bis 2550 mm, ansonsten aber die genannten Längen und genormten Eckbeschläge von ISO-Containern aufweisen.

Ein entsprechendes Transportfahrzeug ist für eine Zuladung von mindestens 20 t ausgelegt und dementsprechend als Schwerlast-Transportfahrzeug ausgebildet. Die genannten Container können in beladenem Zustand bis zu 45 t wiegen. Auch ein Transportfahrzeug, das leer fährt oder einen leeren Container transportiert, soll unter dieses Verständnis fallen, soweit dieses Fahrzeug eine Zuladung von mindestens 20 t transportieren kann.

Derartige Transportfahrzeuge weisen üblicherweise Räder mit Pneus, beispielsweise mit Luft befüllte Gummireifen, auf und sind hierüber flurgebunden, aber nicht schienengebunden und somit frei verfahrbar. Dementsprechend sind die vorliegend betroffenen Transportfahrzeuge von Schienenfahrzeugen und insbesondere von Eisenbahnwagons zu unterscheiden. Die Transportfahrzeuge können darüber hinaus manuell über einen in einer Fahrerkabine mitfahrenden Fahrer, halb-automatisch oder bei so genannten Automated Guided Vehicles (AGV), die keine Fahrerkabine aufweisen müssen, vollautomatisch und somit fahrerlos betrieben werden. Der Antrieb dieser Transportfahrzeuge erfolgt üblicherweise dieselelektrisch, dieselhydraulisch oder vollelektrisch, insbesondere batterieelektrisch.

Derartige Transportfahrzeuge können durch entsprechendes Heben und Senken ihrer Hubplattform Container an eine passive Übergabestation abgeben oder hiervon aufnehmen, wie es beispielsweise in der DE 10 2007 039 778 A1 beschrieben ist.

Bei den bekannten Transportfahrzeugen sind insbesondere die von so genannten Einweisern gebildeten Führungsflächen auf einen Transport von ISO-Containern mit einer Standard-Breite eingerichtet. Hierbei weisen die Führungsflächen einen minimalen und insbesondere unveränderlichen Abstand zueinander auf, der etwas größer als die Standard-Breite von 2438mm, aber geringer als die Breite eines Wide-Body-Containers ist. Daher können insbesondere Wide-Body-Container nicht stabil auf einer im Bereich des minimalen Abstands zwischen den Führungsflächen angeordneten Abstellfläche abgestellt werden. Dies wäre jedoch für einen sicheren Transport erforderlich, da die Container bei derartigen Transportfahrzeugen mit ihren Eckbeschlägen in der Regel nicht über Twistlocks arretiert werden. Ein sicheres und stabiles Abstellen auf den weit genug beabstandeten und üblicherweise schräg verlaufenden Bereichen der Führungsflächen ist nicht möglich, da hier ein Abrutschen auf den schrägen Führungsflächen und eine instabile Schrägstellung des Containers drohen. Daher werden entsprechende Wide-Body-Container bisher nicht mit den vorgenannten Transportfahrzeugen transportiert und insbesondere nicht automatisiert auf entsprechende Transportfahrzeuge verladen, sondern von manuell betriebenen Transportfahrzeugen wie beispielsweise Reach Stackern gehandabt und transportiert.

Weitere Transportfahrzeuge für Container sind aus der DE 10 2009 025 051 A1 und aus der DE 10 2013 114 841 A1 bekannt.

Hiervon ausgehend ist es die Aufgabe der vorliegenden Erfindung, ein verbessertes Transportfahrzeug für Container bereit zu stellen, das eine besonders einfache Anpassung für einen sicheren und stabilen Transport von unterschiedlich ausgebildeten Containern auch in automatisierten Container-Terminals ermöglicht.

Diese Aufgabe wird durch ein Transportfahrzeug mit den Merkmalen des Anspruchs 1 gelöst. In den Ansprüchen 2 bis 9 sind vorteilhafte Ausgestaltungen der Erfindung und in Anspruch 10 eine vorteilhafte Verwendung der Erfindung angegeben.

Ein Transportfahrzeug für Container, mit einer ersten Abstellfläche, auf der ein Container abstellbar ist, und mit zwei sich gegenüberliegenden Führungsflächen, die in Richtung der ersten Abstellfläche aufeinander zu gerichtet verlaufen, um einen Container beim Abstellen auf dem Transportfahrtzeug in Richtung der ersten Abstellfläche zu führen, wobei die erste Abstellfläche zwischen den Führungsflächen angeordnet ist, und wobei zwischen den Führungsflächen eine heb- und senkbare Hubplattform angeordnet ist, wird dadurch verbessert, dass ein Adapter vorgesehen ist, der zwischen einer Bereitschaftsposition und einer Betriebsposition derart bewegbar ist, dass ein Container beim Abstellen auf dem Transportfahrzeug auf die erste Abstellfläche geführt wird, wenn der Adapter in der Bereitschaftsposition ist und die Hubplattform in eine Transportstellung abgesenkt ist, und auf eine von der Hubplattform gebildete zweite Abstellfläche geführt wird, wenn der Adapter in der Betriebsposition auf das Transportfahrzeug aufgesetzt ist und hierbei die Hubplattform in der Transportstellung über den Adapter auf das Transportfahrzeug aufgesetzt ist.

Auf diese Weise können bestehende Transportfahrzeuge bei Bedarf durch eine temporäre Bereitstellung des Adapters in der Betriebsposition unterhalb der Hubplattform und eine damit einhergehende temporäre Ausbildung einer zweiten Abstellfläche durch die auf den Adapter aufgesetzte Hubplattform besonders einfach und flexibel angepasst werden, um unterschiedlich ausgebildete Container sicher aufnehmen und transportieren zu können. Die Anordnung der Führungsflächen muss hierfür nicht verändert und auch die Breite der ersten Führungsfläche muss nicht vergrößert werden. Durch das in der Transportstellung erfolgende Aufsetzen der Hubplattform auf den in seiner Betriebsposition ebenfalls aufgesetzten Adapter wird die von der Hubplattform bereitgestellte zweite Abstellfläche in einer Absenkrichtung eines abzustellenden Containers gesehen der ersten Abstellfläche wirkungsmäßig derart vorgelagert, dass die erste Abstellfläche deaktiviert beziehungsweise unwirksam ist und von der Unterseite, insbesondere den unteren Eckbeschlägen, des abzustellenden Containers nicht mehr erreicht wird, um auf der ersten Abstellfläche abgestellt zu werden. Ein Container wird damit beim Absenken anstatt auf der ersten Abstellfläche zwangsläufig auf der von der Hubplattform gebildeten zweiten Abstellfläche abgestellt und hierbei gegebenenfalls durch zumindest eine der beiden Führungsflächen entsprechend geführt und ausgerichtet. Wenn der Adapter in der Bereitschaftsposition ist, ist die erste Abstellfläche hingegen aktiviert und wirksam, so dass ein Container beim Absenken der Hubplattform in die Transportstellung zwangsläufig auf der ersten Abstellfläche abgestellt und hierbei gegebenenfalls durch zumindest eine der beiden Führungsflächen entsprechend geführt und ausgerichtet wird. Die zweite Abstellfläche ist in der Bereitschaftsposition dementsprechend deaktiviert und unwirksam. Ein derart ausgebildetes Transportfahrzeug ermöglicht einen sicheren und stabilen Transport von unterschiedlich ausgebildeten Containern insbesondere auch dann, wenn das Transportfahrzeug vollautomatisch geführt und dementsprechend als fahrerloses Transportfahrzeug im Sinne eines AGV ausgebildet und betrieben ist. Der Adapter kann hierbei also manuell zwischen der Bereitschaftsposition und der Betriebsposition bewegt werden. In diesem Fall ist keine dauerhafte Verbindung oder Führung des Adapters am Transportfahrzeug erforderlich.

Der Adapter kann zu diesem Zweck als einfaches passives und insbesondere selbsttragendes Element ausgebildet sein, das in der Betriebsposition in seiner vertikalen Lage zwischen den Führungsflächen allein durch das flächige Aufsetzen beziehungsweise Abstellen mit seiner Unterseite auf einer stationären und in Bezug auf die Führungsflächen ortsfesten Stützfläche des Transportfahrzeugs gehalten wird, ohne dass für das Halten in der vertikalen Lage ein aktiver Halteantrieb erforderlich ist. Der Adapter muss lediglich in sich eine geeignete Dimensionierung und Tragfähigkeit aufweisen, um auch unter der Einwirkung eines abgestellten Containers die in der Transportstellung aufgesetzte Hubplattform zu stützen. Der Adapter ist hierfür vorzugsweise aus einem Stahlwerkstoff hergestellt. Auch wird durch den in der Betriebsposition angeordneten Adapter in vorteilhafter Weise erreicht, dass ein Hubantrieb für das Heben und Senken der Hubplattform in Bezug auf den Kraftfluss überbrückt wird, so dass in der auf dem Adapter aufgesetzten Transportstellung von der Hubplattform ausgehende Belastungen über den Adapter in die Stützfläche des Transportfahrzeugs abgetragen werden, ohne hierbei den Hubantrieb zu belasten.

In vorteilhafter Weise ist vorgesehen, dass der Adapter an dem Transportfahrzeug zwischen der Bereitschaftsposition und der Betriebsposition beweglich gelagert ist. In diesem Fall ist der Adapter also über eine geeignete Lagerung mit dem Transportfahrzeug verbunden. Dadurch kann der Adapter beispielsweise mittels Verschieben und/oder Verschwenken auf einfache Weise so bewegt und hierbei geführt werden, dass die zweite Abstellfläche aktiviert und die erste Abstellfläche deaktiviert wird und umgekehrt. Insbesondere kann der Adapter drehbar gelagert werden, so dass er in der Bereitschaftsposition platzsparend mit seiner Längserstreckung vertikal und somit hochkantig angeordnet sein kann, um hieraus in die horizontale beziehungsweise waagerechte Betriebsposition geschwenkt zu werden. Auch eine translatorisch bewegliche Lagerung kann auf einfache Weise eingerichtet werden, da hierbei nur ein Linearantrieb ohne einen zur Rotation erforderlichen Hebelmechanismus einzurichten ist.

Weiterhin vorteilhaft kann vorgesehen sein, dass der Adapter in der Bereitschaftsposition neben einer Unterseite der Hubplattform angeordnet ist und hierbei vorzugsweise in eine an der Unterseite ausgebildete Öffnung hineinragt, wenn die Hubplattform in die Transportstellung abgesenkt ist. Dadurch kann der Adapter besonders platzsparend an dem Transportfahrzeug untergebracht werden. Auch kann auf diese Weise der Bewegungsbereich der Hubplattform unterhalb der Hubplattform frei gehalten werden, so dass mehr Raum für ein Absenken der Hubplattform in die Transportstellung verfügbar ist, um hierdurch Container auf der ersten Abstellfläche abzustellen. Zudem kann somit die Hubplattform zur Entlastung ihres Hubantriebs auch in der Transportstellung auf dem Fahrzeugrahmen abgesetzt werden, wenn der Adapter in der Bereitschaftsposition ist.

In vorteilhafter Weise ist vorgesehen, dass die erste Abstellfläche und die zweite Abstellfläche so zueinander angeordnet sind, dass ein auf der ersten Abstellfläche abgestellter Container mit seiner Unterseite, insbesondere mit seinen unteren Eckbeschlägen, zwischen den Führungsflächen in einer vorzugsweise horizontalen ersten Ebene positioniert ist und ein auf der zweiten Abstellfläche abgestellter Container mit seiner Unterseite, insbesondere mit seinen unteren Eckbeschlägen, zwischen den Führungsflächen in einer vorzugsweise horizontalen zweiten Ebene positioniert ist, die zweite Ebene oberhalb der ersten Ebene angeordnet ist und in der zweiten Ebene die Führungsflächen mit einem größeren Abstand voneinander beabstandet sind als in der ersten Ebene. Hierdurch können unterschiedlich breite Container, insbesondere Wide-Body-Container, die auf der ersten Abstellfläche nicht stabil mit horizontal ausgerichteter Unterseite zwischen den Führungsflächen abgestellt werden können, auf der zweiten Abstellfläche in horizontaler Ausrichtung stabil und somit sicher zwischen den Führungsflächen auf der temporär eingerichteten zweiten Abstellfläche abgestellt werden. Wenn anschließend wieder ein Container mit Standard-Breite transportiert werden soll, kann der Adapter auf einfache Weise wieder in die Bereitschaftsposition bewegt werden. Dadurch wird die erste Abstellfläche wieder aktiviert und wirksam, wenn die Hubplattform in die Transportstellung abgesenkt ist. Dies ist vorteilhaft, da für Container mit der im Vergleich zu Wide-Body-Containern schmaleren Standard-Breite eine bessere Ausrichtung und Positionierung durch die geringere minimale Beabstandung der Führungsflächen im Bereich der unteren ersten Ebene bewirkt wird.

Die oben erwähnte Überbrückung des Hubantriebs der zur Ausbildung der zweiten Abstellfläche in die Transportstellung abgesenkten Hubplattform wird besonders einfach und wirksam dadurch erreicht, dass der Adapter in der Betriebsposition unterhalb der Hubplattform zwischen der Hubplattform und einem Fahrzeugrahmen des Transportfahrzeugs angeordnet und hierbei auf den Fahrzeugrahmen aufgesetzt ist, so dass die Hubplattform in der Transportstellung auf dem Adapter abstellbar ist.

In konstruktiv einfacher Weise ist vorgesehen, dass der Adapter plattenförmig ausgebildet ist und eine ebene Oberseite sowie gegenüberliegend eine hierzu parallel verlaufende ebene Unterseite aufweist, und dass in der Betriebsposition die der Hubplattform zugewandte Oberseite und die einer Oberseite eines Fahrzeugrahmens zugewandte Unterseite horizontal ausgerichtet sind. Dies ermöglicht eine stabile Abstützung der in die Transportstellung abgesenkten Hubplattform auf dem in der Betriebsposition befindlichen Adapter. Auch eine rahmenförmige Ausbildung des Adapters ist möglich.

Eine noch stabilere Abstützung und Überbrückung des Hubantriebs ist dadurch erreichbar, dass zwei Adapter vorgesehen sind, die ausgehend von ihrer Bereitschaftsposition voneinander weggerichtet in die Betriebsposition, insbesondere quer zu einer Längsrichtung des Transportfahrzeugs, beweglich gelagert sind.

In konstruktiv einfacher Weise ist außerdem vorgesehen, dass jeder Adapter über eine Positioniervorrichtung mit einem Positionierantrieb zwischen der Bereitschaftsposition und der Betriebsposition bewegbar ist, wobei der Positionierantrieb vorzugsweise als Linearantrieb ausgebildet ist und insbesondere einen Hubzylinder, vorzugsweise Elektrozylinder oder Hydraulikzylinder, oder einen Riementrieb, Kettentrieb oder Ritzel-Zahnstangentrieb umfasst.

In konstruktiv einfacher Weise ist zudem vorgesehen, dass jeder Adapter an einem Positionierarm der Positioniervorrichtung angeordnet ist und der Positionierarm an dem Transportfahrzeug bewegbar, insbesondere schwenkbar, gelagert und mit dem Positionierantrieb antriebsmäßig verbunden ist, um den Adapter zwischen der Bereitschaftsposition und der Betriebsposition zu bewegen.

Eine besonders vorteilhafte Verwendung eines wie zuvor beschrieben ausgebildeten Transportfahrzeugs ergibt sich im Hinblick auf die Aufnahme und den Transport eines als Wide-Body-Container ausgebildeten Containers.

Ein Ausführungsbeispiel der Erfindung wird anhand der nachfolgenden Beschreibung näher erläutert. Es zeigen:
Figur 1 eine perspektivische Ansicht eines als Hub-AGV ausgebildeten Transportfahrzeugs,
Figur 2a eine schematische Schnittansicht einer Vorderseite des Transportfahrzeugs gemäß Figur 1 mit zwei Adaptern in einer Bereitschaftsposition,
Figur 2b die Schnittansicht gemäß Figur 2a mit zwei Adaptern in einer Betriebsposition und einer in eine Hubstellung angehobenen Hubplattform und
Figur 2c die Schnittansicht gemäß Figur 2b mit der in eine Transportstellung abgesenkten Hubplattform.

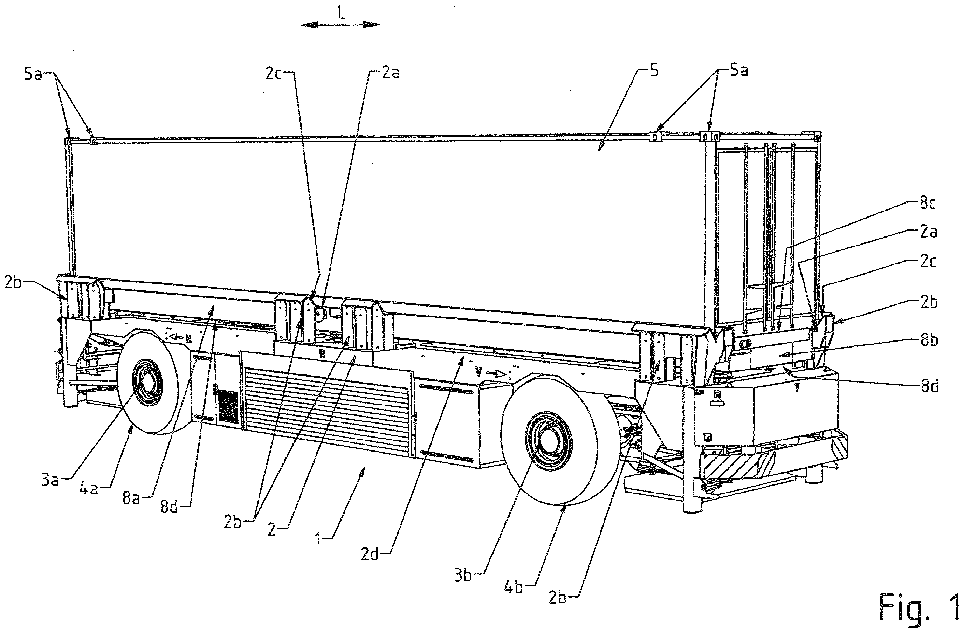

Die Figur 1 zeigt eine perspektivische Ansicht eines flurgebundenen

Transportfahrzeugs 1 für Container 5, insbesondere ISO-Container und Wide-Body-Container, das nach Art eines AGV vollautomatisch fahrerlos betreibbar und insbesondere ohne Fahrerkabine ausgebildet ist. Das Transportfahrzeug 1 kann jedoch auch manuell oder halb-automatisch betrieben sein und hierfür eine Fahrerkabine aufweisen. Das als Vierradfahrzeug ausgebildete Transportfahrzeug 1 umfasst einen Fahrzeugrahmen 2, an dem auf einer gemeinsamen Vorderachse 3a zwei vordere Räder 4a und auf einer gemeinsamen Hinterachse 3b zwei hintere Räder 4b gelagert sind. Die vier Räder 4a, 4b sind mit einer Bereifung versehen, die vorzugsweise eine mit Luft befüllte Gummibereifung im Sinne von Pneus ist. Über die Räder 4a ist das flurgebundene Transportfahrzeug 1 frei und dementsprechend nicht schienengebunden verfahrbar.

Außerdem umfasst das Transportfahrzeug 1 einen Fahrantrieb, der im Wesentlichen aus einem vorderen Elektromotor, einem vorderen Verteilgetriebe, einem hinteren Elektromotor und einem hinteren Verteilgetriebe besteht. Der vordere Elektromotor ist in Längsrichtung L des Transportfahrzeuges 1 gesehen zentral und im Bereich der Vorderachse 3a unter dem Fahrzeugrahmen 2 befestigt. Der hintere Elektromotor ist in Längsrichtung L des Transportfahrzeuges 1 gesehen zentral und im Bereich der Hinterachse 3b unter dem Fahrzeugrahmen 2 befestigt. Der vordere Elektromotor treibt über das vordere Verteilgetriebe die beiden vorderen Räder 4a an und der hintere Elektromotor über das hintere Verteilgetriebe die beiden hinteren Räder 4b. Das Transportfahrzeug 1 hat somit einen Allradantrieb. Der Fahrantrieb kann dieselelektrisch oder vollelektrisch mit einer Batterie, insbesondere einer Bleibatterie, ausgebildet sein.

Das Transportfahrzeug 1 weist an einer sich im Wesentlichen horizontal erstreckenden Oberseite 2d seines Fahrzeugrahmens 2 eine sich in einer horizontalen Ebene erstreckende erste Abstellfläche 2a auf, auf der ein 45 Fuß langer und als ISO-Container ausgebildeter Container 5 abgestellt ist. Bei Containern dieser Länge sind jeweils an den in Längsrichtung L gegenüberliegenden Enden auf einer 45 Fuß-Position und zusätzlich auch von jedem Ende ausgehend um 2,5 Fuß zur Containermitte versetzt auf einer 40 Fuß-Position entsprechende Eckbeschläge 5a vorgesehen. Die erste Abstellfläche 2a erstreckt sich folglich in Längsrichtung L zwischen den beiden 45 Fuß-Positionen. Dadurch können auf der ersten Abstellfläche 2a auch ein 40 Fuß langer oder in Längsrichtung L gesehen hintereinander zwei 20 Fuß lange und als ISO-Container ausgebildete Container 5, insbesondere über ihre unteren Eckbeschläge 5a, abgestellt werden. Die Eckbeschläge 5a eines in Längsrichtung L zentriert abgestellten 40 Fuß langen Containers 5 sind auf der 40 Fuß-Position angeordnet. 20 Fuß lange Container 5 sind mit ihren Eckbeschlägen 5a, die den in Längsrichtung L gegenüberliegenden Enden des Transportfahrzeugs 1 zugewandt sind, auf der 45 Fuß-Position angeordnet. Die in der Längserstreckung L gesehen der Fahrzeugmitte zugewandten Eckbeschläge 5a sind dementsprechend auf einer 20 Fuß-Position der ersten Abstellfläche 2a angeordnet.

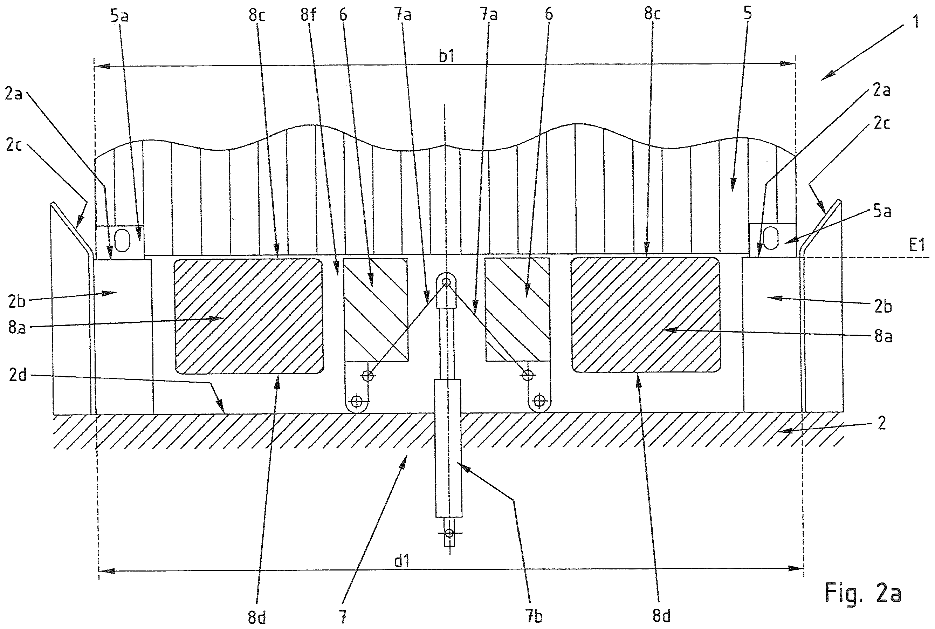

Auf dem Fahrzeugrahmen 2 des Transportfahrzeugs 1 sind außerdem zwei sich gegenüberliegende Führungsflächen 2c vorgesehen, zwischen denen die erste Abstellfläche 2a angeordnet ist. Hierbei ist die erste Abstellfläche 2a in Bezug auf die Führungsflächen 2c ortsfest angeordnet. Die vorzugsweise ebenen Führungsflächen 2c erstrecken sich jeweils in Längsrichtung L zwischen den beiden äußeren 45 Fuß-Positionen. Auch verlaufen die Führungsflächen 2c in Richtung der ersten Abstellfläche 2a trichterartig aufeinander zu gerichtet, enden jedoch mit einem minimalen Abstand d1 (siehe Figur 2a) zueinander. Mit anderen Worten sind die Führungsflächen 2c an ihrem der ersten Abstellfläche 2a zugewandten unteren Ende mit dem minimalen Abstand d1 voneinander beabstandet und weisen hiervon ausgehend einen von der ersten Abstellfläche 2a nach oben und voneinander weg gerichteten Verlauf auf, durch welchen die Führungsflächen 2c einen nach oben zunehmenden Abstand zueinander aufweisen. Der minimale Abstand d1 entspricht damit einer maximalen Breite der ersten Abstellfläche 2a rechtwinklig zur Längsrichtung L. Durch diese Ausgestaltung der Führungsflächen 2c kann ein Container 5 beziehungsweise dessen untere Eckbeschläge 5a beim zum Abstellen auf dem Transportfahrzeug 1 erfolgenden Absenken von den Führungsflächen 2c in Richtung der ersten Abstellfläche 2a geführt und zu der ersten Abstellfläche 2a entsprechend seitlich ausgerichtet werden. Außerdem dienen die Führungsflächen 2c zur Sicherung gegen ein Verrutschen von auf dem Transportfahrzeug 1 abgestellten Containern 5. Dies gilt für sämtliche der zuvor genannten Containerlängen.

In Figur 1 ist zu erkennen, dass sich die erste Abstellfläche 2a und jede Führungsfläche 2c aus mehreren getrennten und voneinander beabstandeten Teilflächen zusammensetzt, die jeweils von einem auch als Einweiser bezeichneten Führungselement 2b gebildet werden. Hierfür ist im Bereich der Ecken zweier in Längsrichtung L gesehen hintereinander angeordneter gedachter Rechtecke jeweils ein Führungselement 2b auf dem Fahrzeugrahmen 2 angeordnet. Damit sind an jedem der beiden sich in Längsrichtung L gegenüberliegenden Enden des Transportfahrzeugs 1 zwei äußere Führungselemente 2b angeordnet, die die 45 Fuß-Positionen und die 40 Fuß-Positionen abdecken und sich dementsprechend hierzwischen mit ihren Teilflächen der ersten Abstellfläche 2a und der zugehörigen Führungsfläche 2c erstrecken. Zwischen den äußeren Führungselementen 2b sind im Bereich der Fahrzeugmitte zwei weitere Paare von inneren Führungselementen 2b angeordnet, die mit ihren Teilflächen jeweils eine der 20 Fuß-Positionen abdecken. Die jeweils einer Längsseite zugeordneten inneren Führungselemente 2b können auch zu einem einzigen inneren Führungselement 2b zusammengefasst sein, von dem die beiden 20 Fuß-Positionen abgedeckt werden.

Der Figur 1 ist außerdem zu entnehmen, dass auf dem Fahrzeugrahmen 2 in Längsrichtung L des Transportfahrzeugs 1 gesehen hintereinander eine erste Hubplattform 8a und eine zweite Hubplattform 8b angeordnet sind. Das Transportfahrzeug 1 ist daher als so genanntes Hub-AGV ausgebildet.

Die Hubplattformen 8a, 8b sind insbesondere zwischen den Führungsflächen 2c angeordnet, wobei sich zwischen jeder Hubplattform 8a, 8b und jeder Führungsfläche 2c eine Teilfläche der ersten Abstellfläche 2a erstreckt (siehe Figur 2a). Ausgehend von der jeweiligen Führungsfläche 2c erstreckt sich jede Teilfläche der ersten Abstellfläche 2a vorzugsweise in etwa so weit in Richtung der Hubplattform 8a, 8b, dass auf der Teilfläche ein Eckbeschlag 5a vollständig flächig aufliegen kann. Die Hubplattformen 8a, 8b sind jeweils rahmenförmig ausgebildet und können über ihren jeweiligen Hubantrieb unabhängig voneinander oder synchron relativ zu den Führungsflächen 2c und zwischen diesen und den sich hieran anschließenden Teilflächen der ersten Abstellfläche 2a angehoben und abgesenkt werden. Mittels der Hubplattformen 8a, 8b können Container 5 also auf der ersten Abstellfläche 2a abgestellt und hiervon ausgehend angehoben werden.

Hierbei ist insbesondere ein Heben und Senken zwischen einer angehobenen Hubstellung, in der eine Unterseite 8d der Hubplattform 8a, 8b von der Oberseite 2d des Fahrzeugrahmens 2 beabstandet ist, und einer Transportstellung möglich. In der Hubstellung tragen die Hubplattformen 8a, 8b die auf ihrer Oberseite 8c stehenden Container 5. Für ein Abstellen von Containern 5 auf der ersten Abstellfläche 2a werden die Hubplattformen 8a, 8b in die Transportstellung abgesenkt. In der Figur 1 sind beide Hubplattformen 8a und 8b gemeinsam in der abgesenkten Transportstellung dargestellt. In der Transportstellung ist die Unterseite 8d jeweils auf der Oberseite 2d abgesetzt, wodurch der zwischen Fahrzeugrahmen 2 und der entsprechenden Hubplattform 8a, 8b angeordnete Hubantrieb jeweils in Bezug auf einen Kraftfluss zwischen der zugehörigen Hubplattform 8a, 8b und dem Fahrzeugrahmen 2 überbrückt wird. Alternativ oder zusätzlich zum Absetzen auf dem Fahrzeugrahmen 2 kann zudem in der Transportstellung die Oberseite 8c der Hubplattformen 8a, 8b von der Unterseite des abgestellten Containers 5 beabstandet sein und mit dieser somit nicht in Kontakt stehen. Dadurch wird erreicht, dass zumindest die Hubantriebe der Hubplattformen 8a, 8b nicht durch abgestellte Container 5 belastet werden, da sämtliche von abgestellten Containern 5 aufgebrachten Belastungen und der entsprechende Kraftfluss über die erste Abstellfläche 2a in den Fahrzeugrahmen 2 abgetragen beziehungsweise eingeleitet werden. Die Hubplattformen 8a, 8b befinden sich daher beim Transport von Containern 5 in der Transportstellung.

Die Länge jeder einzelnen Hubplattform 8a, 8b ist außerdem jeweils so gewählt, dass auf der Oberseite 8c der entsprechenden Hubplattform 8a, 8b jeweils ein nicht dargestellter 20-Fuß langer Container 5 aufgenommen werden kann. Auch ergänzen sich die erste Hubplattform 8a und die zweite Hubplattform 8b, für den Fall, dass sie synchron angehoben und abgesenkt werden, zu einer großen Hubplattform auf der ein 40-Fuß langer Container 5 oder der in Figur 1 dargestellte ein 45-Fuß lange Container 5 aufgenommen werden kann. Das Transportfahrzeug 1 ist daher im eingangs definierten Sinne als Schwerlast-Transportfahrzeug ausgebildet und für eine entsprechende Zuladung ausgelegt.

Das Transportfahrzeug 1 weist an jeder Hubplattform 8a, 8b insgesamt zwei plattenförmig ausgebildete Adapter 6 auf, deren Funktionsweise nachfolgend erläutert wird.

In der Figur 2a ist eine schematische Schnittansicht einer Vorderseite des Transportfahrzeugs gemäß Figur 1 mit zwei Adaptern 6 in einer Bereitschaftsposition gezeigt. In gleicher Weise sind an dem der Vorderseite gegenüberliegenden rückseitigen Ende des Transportfahrzeugs 1 zwei Adapter 6 in der Bereitschaftsposition angeordnet. Aus Symmetriegründen gelten die nachfolgend bezüglich der ersten Hubplattform 8a erfolgenden Erläuterungen analog für die zweite Hubplattform 8b und die dort angeordneten Adapter 6.

Die der Vorderseite zugewandte erste Hubplattform 8a ist in der abgesenkten Transportstellung abgebildet, in der die Oberseite 8c von der Unterseite des auf der ersten Abstellfläche 2a abgestellten Containers 5 beabstandet ist. Entsprechend der rahmenförmigen Ausbildung jeder der beiden Hubplattformen 8a, 8b erstreckt sich eine durchgehende Öffnung 8f von der dem Fahrzeugrahmen 2 zugewandten Unterseite 8d zu der dem Container 5 zugewandten Oberseite 8c der Hubplattform 8a beziehungsweise 8b. Gezeigt sind außerdem die beiden der Vorderseite zugewandten äußeren Führungselemente 2b. Die beiden in Figur 1 gezeigten und der Rückseite zugewandten äußeren Führungselemente 2b sind ebenso wie die in Figur 1 gezeigten inneren Führungselemente 2b verdeckt und somit in Figur 2a nicht dargestellt.

Die beiden Adapter 6 sind zwischen einer Bereitschaftsposition und einer Betriebsposition bewegbar. Hierfür sind die Adapter 6 an dem Transportfahrzeug 1 entsprechend beweglich gelagert, beispielsweise über eine gemeinsame Positioniervorrichtung 7, mittels der die Adapter 6 synchron und automatisiert zwischen der jeweiligen Bereitschaftsposition und Betriebsposition bewegbar sind. Alternativ kann auch für jeden Adapter 6 eine eigene Positioniervorrichtung 7 vorgesehen sein. In der in Figur 2a dargestellten Bereitschaftsposition sind die Adapter 6 neben der Unterseite 8d der Hubplattform 8a angeordnet, wobei sie in die an der Unterseite 8d ausgebildete Öffnung 8f hineinragen. Auch die an dem Fahrzeugrahmen 2 gelagerte Positioniervorrichtung 7 ragt mit ihrem als Positionierantrieb 7b dienenden und sich vertikal erstreckenden Hubzylinder zwischen den beiden Adaptern 6 in die Öffnung 8f hinein. Der Hubzylinder ist vorzugsweise als Elektrozylinder oder Hydraulikzylinder ausgebildet. Als Positionierantrieb 7b können auch andere Linearantriebe verwendet werden wie beispielsweise ein Riementrieb, Kettentrieb oder Ritzel-Zahnstangentrieb.

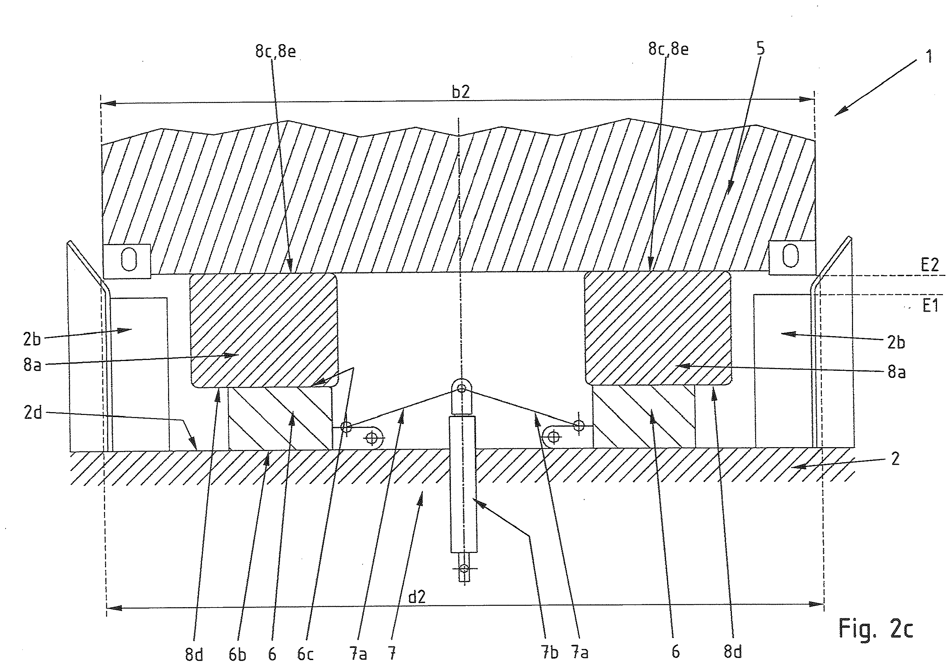

Wenn die Adapter 6 in der Bereitschaftsposition sind, wird ein Container 5 beim Abstellen auf dem Transportfahrzeug 1 zwangsläufig auf die erste Abstellfläche 2a geführt und auf dieser abgestellt, wenn auch die Hubplattform 8a in die Transportstellung abgesenkt ist. Diese Situation ist in den Figuren 1 und 2a gezeigt. Wenn die Adapter 6 in der Betriebsposition sind, in der sie auf das Transportfahrzeug 1 aufgesetzt sind, und hierbei auch die Hubplattform 8a in der Transportstellung über die beiden Adapter 6 auf das Transportfahrzeug 1 aufgesetzt ist, wird von der Hubplattform 8a eine zwischen den Führungsflächen 2c angeordnete zweite Abstellfläche 8e gebildet, auf die ein Container 5 beim Abstellen auf dem Transportfahrzeug 1 zwangsläufig geführt und abgestellt wird. Diese Situation ist in der unten beschriebenen Figur 2c dargestellt.

Der in Figur 2a abgebildete und auf der ersten Abstellfläche 2a abgestellte Container 5 weist eine Breite b1 von 2438 mm auf, die der Standard-Breite von ISO-Containern entspricht und die im Bereich des minimalen Abstands d1 zwischen den Führungsflächen 2c aufgenommen werden kann. Der Container 5 ist hierbei mit seinen unteren Eckbeschlägen 5a auf der ersten Abstellfläche 2a und insbesondere auf deren Teilflächen abgestellt, die von den äußeren Führungselementen 2b gebildet werden. Die auch als Corner-Castings bezeichneten und an der Unterseite des Containers 5 angeordneten unteren Eckbeschläge 5a sind hierdurch in einer horizontalen ersten Ebene E1 positioniert, die sich parallel zu der horizontalen ersten Abstellfläche 2a erstreckt und insbesondere von dieser gebildet wird. Auch die Unterseite des Containers 5 ist horizontal und parallel zu der ersten Ebene E1 ausgerichtet.

Ein Wide-Body-Container mit einer Breite b2, die etwa 2500 bis 2550 mm beträgt und somit breiter als der minimale Abstand d1 ist, kann nicht stabil mit einer horizontalen Ausrichtung seiner Unterseite beziehungsweise seiner Eckbeschläge 5a auf der ersten Abstellfläche 2a abgestellt werden, da ein Abrutschen entlang der Führungsflächen 2a und damit eine zu vermeidende Schräglage des Containers 5 droht (siehe Figur 2c). Für ein sicheres und stabiles Abstellen eines als Wide-Body-Containers ausgebildeten Containers 5 sind die an dem Transportfahrzeug 1 vorgesehenen Adapter 6 in die Betriebsposition zu bewegen. Dadurch wird die erste Abstellfläche 2a deaktiviert beziehungsweise unwirksam und die zweite Abstellfläche 2b aktiviert beziehungsweise wirksam, wenn die Hubplattform 8a in der Transportstellung auf den in der Betriebsposition befindlichen Adaptern 6 aufgesetzt ist.

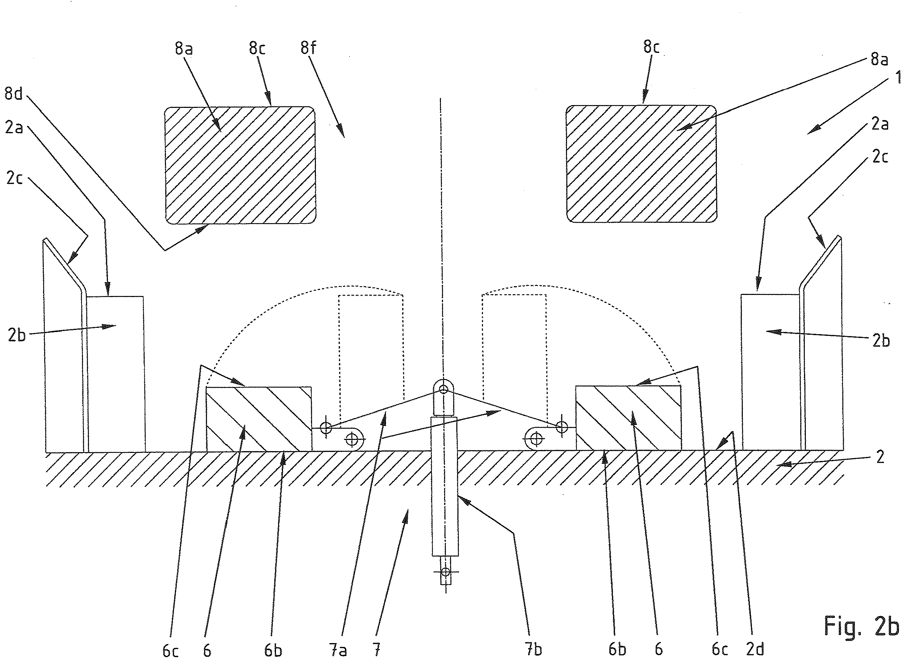

Die Figur 2b zeigt die Schnittansicht gemäß Figur 2a mit den zwei Adaptern 6 in der Betriebsposition, wobei die Hubplattform 8a in eine Hubstellung angehoben ist. Die in Figur 2b ebenfalls gezeigte Positioniervorrichtung 7 für die beiden Adapter 6 umfasst neben dem Positionierantrieb 7b zwei Positionierarme 7a. Hierbei ist jeder Positionierarm 7a mit einem unteren Ende gelenkig mit einem der Adapter 6 und mit einem gegenüberliegenden oberen Ende gelenkig an einem gemeinsamen Drehpunkt dem Positionierantrieb 7b verbunden. Jeder Adapter 6 ist gelenkig und um eine sich in Längsrichtung L erstreckende Drehachse drehbar an der Oberseite 2d des Fahrzeugrahmens 2 gelagert. Eine Betätigung des Positionierantriebs 7b bewirkt eine vertikale Lageänderung des Drehpunkts, wodurch die Positionierarme 7a eine Drehung der Adapter 6 gegenläufig zueinander bewirken. Die Drehung der Adapter 6 erfolgt um etwa 90 Grad. Dadurch können die Adapter 6 aus ihrer in der Bereitschaftsposition hochkantigen Anordnung neben dem Bewegungsbereich der Hubplattform 8a (siehe Figur 2a) voneinander weg gerichtet und in eine in der Betriebsposition waagerechte Anordnung in dem Bewegungsbereich der Hubplattform 8a unterhalb von dessen Unterseite 8d bewegt werden. Hierfür ist wie in Figur 2b angedeutet zunächst die Hubplattform 8a anzuheben, um einen Schwenkbereich der Adapter 6 freizugeben, der sich beidseitig weiter in Richtung der Führungselemente 2b erstreckt als die Öffnung 8f. In der Betriebsposition ist jeder Adapter 6 mit seiner ebenen Unterseite 6b auf die Oberseite 2d, die somit als Stützfläche des Transportfahrzeugs 1 dient, aufgesetzt. Die Stützfläche ist von dem Adapter 6 in der Bereitschaftsposition wieder freigegeben (siehe Figur 2a). Beide Adapter 6 weisen auch eine ebene Oberseite 6b auf. In der Betriebsposition sind die der Hubplattform 8a zugewandte Oberseite 6c und die der Oberseite 2d zugewandte Unterseite 6b horizontal ausgerichtet.

In der Figur 2c ist die Schnittansicht gemäß Figur 2b mit der in eine Transportstellung abgesenkten ersten Hubplattform 8a abgebildet. Hierbei sind die Adapter 6 wie zuvor anhand Figur 2b erläutert in der Betriebsposition unterhalb der Hubplattform 8a zwischen der Hubplattform 8a und dem Fahrzeugrahmen 2 angeordnet und hierbei auf den Fahrzeugrahmen 2 beziehungsweise dessen Oberseite 2d aufgesetzt, so dass die Hubplattform 8a in der Transportstellung wie in Figur 2c dargestellt auf dem Adapter 6 abstellbar ist. Von der ebenen und sich horizontal erstreckenden Oberseite 8c der in der Transportstellung auf die in der Betriebsposition befindlichen Adapter 6 aufgesetzten Hubplattform 8a, wird die zweite Abstellfläche 8e ausgebildet, die der deaktivierten ersten Abstellfläche 2a vorgelagert ist. Die beiden Abstellflächen 2a, 8e erstrecken sich hierbei in zueinander parallelen horizontalen Ebenen.

Auf der nun wirksamen zweiten Abstellfläche 8e ist ein als Wide-Body-Container ausgebildeter Container 5 abgestellt. Beide Hubplattformen 8a, 8b wurden hierfür in die Transportstellung abgesenkt und hierbei auf die Adapter 6 aufgesetzt. Erkennbar ist, dass der insbesondere mit seiner sich zwischen den unteren Eckbeschlägen 5a erstreckenden Unterseite auf der zweiten Abstellfläche 8e abgestellte Container 5 mit seinen unteren Eckbeschlägen 5a zwischen den Führungselementen 2b in einer horizontalen zweiten Ebene E2 positioniert ist. Die zweite Ebene E2 ist oberhalb der ersten Ebene E1 angeordnet. Durch eine entsprechende Dimensionierung der Dicke beziehungsweise Höhe der identisch ausgebildeten Adapter 6 ist die zweite Ebene E2 in einem so hohen Bereich zwischen den Führungsflächen 2c angeordnet, in dem die Führungsflächen 2c nicht mehr mit dem minimalen Abstand d1 parallel zueinander verlaufen, sondern mit einem größeren Abstand d2 voneinander beabstandet sind als in der ersten Ebene E1. Dadurch kann auf der von der Oberseite 8c der Hubplattformen 8a, 8b gebildeten zweiten Abstellfläche 8e ein Wide-Body-Container mit einer sicheren und stabilen horizontalen Ausrichtung abgestellt werden, ohne dass ein Abrutschen seiner unteren Eckbeschläge 5a auf den schrägen Führungsflächen 2c droht.

Wenn auf dem Transportfahrzeug 1 wieder ein Container 5 mit der Standard-Breite b1 abgestellt werden soll, können die Adapter 6 in ihre Bereitschaftsposition zurück bewegt werden. Dies führt dazu, dass der Bewegungsbereich der Hubplattformen 8a, 8b wieder freigegeben ist, um in der Transportstellung so weit abgesenkt werden zu können, dass die Oberseite 8c der ersten Abstellfläche 2a nachgelagert ist. Dadurch wird die zweite Abstellfläche 8e deaktiviert. Der Container 5 wird dann zwangsläufig auf die somit wieder wirksam gewordene erste Abstellfläche 2a geführt und kann hierauf geführt und sicher abgestellt werden, ohne dass die Unterseite des Containers 5 nur Kontakt mit der Oberseite 8c in Kontakt steht.

Durch die in den Figuren gezeigte und oben beschriebene Anordnung der Adapter 6 und insbesondere der zugehörigen Positioniervorrichtungen 7 oberhalb des Fahrzeugrahmens 2 und im Bereich der Öffnung 8f ist eine besonders einfache Nachrüstung von Transportfahrzeugen 1 möglich, insbesondere um diese für einen automatisierten Transport von Wide-Body-Containern zu verwenden. Auch wird die Hub- und Senkbewegung der Hubplattformen 8a, 8b in vorteilhafter Weise nicht behindert, da die Adapter 6 sowohl in der Bereitschaftsposition als auch in der Betriebsposition außerhalb des sich oberhalb der Oberseite 8c erstreckenden Bewegungsbereichs der Hubplattformen 8a, 8b angeordnet sind. Dadurch können auch mit entsprechenden Adaptern 6 ausgestattete Hub-AGVs Container 5 an eine passive Übergabestation abgeben oder hiervon aufnehmen, wie es beispielsweise in der DE 10 2007 039 778 A1 beschrieben ist.

Grundsätzlich ist es auch möglich, dass nur ein plattenförmiger oder rahmenförmiger Adapter 6 vorgesehen ist, der in seiner Betriebsposition auf das Transportfahrzeug 1 unterhalb der Hubplattformen 8a und 8b aufgesetzt ist, damit die Hubplattformen 8a, 8b in der abgesenkten Transportstellung auf den Adapter 6 aufgesetzt werden können und hierbei mit ihrer Oberseite 8c zur Ausbildung der zweiten Abstellfläche 8e entsprechend hoch genug oberhalb der ersten Abstellfläche 2a festgelegt werden können.

### Bezugszeichenliste

- 1: Transportfahrzeug
- 2: Fahrzeugrahmen
- 2a: erste Abstellfläche
- 2b: Führungselement
- 2c: Führungsfläche
- 2d: Oberseite
- 3a: Vorderachse
- 3b: Hinterachse
- 4a: vordere Räder
- 4b: hintere Räder
- 5: Container
- 5a: Eckbeschlag
- 6: Adapter
- 6b: Unterseite
- 6c: Oberseite
- 7: Positioniervorrichtung
- 7a: Positionierarm
- 7b: Positionierantrieb
- 8a: erste Hubplattform
- 8b: zweite Hubplattform
- 8c: Oberseite
- 8d: Unterseite
- 8e: zweite Abstellfläche

- b1: Breite
- b2: Breite
- d1: Abstand
- d2: Abstand
- E1: erste Ebene
- E2: zweite Ebene
- L: Längsrichtung

## Patentansprüche

1. Transportfahrzeug (1) für Container (5), mit einer ersten Abstellfläche (2a), auf der ein Container (5) abstellbar ist, und mit zwei sich gegenüberliegenden Führungsflächen (2c), die in Richtung der ersten Abstellfläche (2a) aufeinander zu gerichtet verlaufen, um einen Container (5) beim Abstellen auf dem Transportfahrtzeug (1) in Richtung der ersten Abstellfläche (2a) zu führen, wobei die erste Abstellfläche (2a) zwischen den Führungsflächen (2c) angeordnet ist, und wobei zwischen den Führungsflächen (2c) eine heb- und senkbare Hubplattform (8a, 8b) angeordnet ist, **dadurch gekennzeichnet, dass** ein Adapter (6) vorgesehen ist, der zwischen einer Bereitschaftsposition und einer Betriebsposition derart bewegbar ist, dass ein Container (5) beim Abstellen auf dem Transportfahrzeug (1) auf die erste Abstellfläche (2a) geführt wird, wenn der Adapter (6) in der Bereitschaftsposition ist und die Hubplattform (8a, 8b) in eine Transportstellung abgesenkt ist, und auf eine von der Hubplattform (8a, 8b) gebildete zweite Abstellfläche (8e) geführt wird, wenn der Adapter (6) in der Betriebsposition auf das Transportfahrzeug (1) aufgesetzt ist und hierbei die Hubplattform (8a, 8b) in der Transportstellung über den Adapter (6) auf das Transportfahrzeug (1) aufgesetzt ist.

2. Transportfahrzeug (1) nach Anspruch 1, **dadurch gekennzeichnet, dass** der Adapter (6) an dem Transportfahrzeug (1) zwischen der Bereitschaftsposition und der Betriebsposition beweglich gelagert ist.

3. Transportfahrzeug (1) nach Anspruch 1 oder 2, **dadurch gekennzeichnet, dass** der Adapter (6) in der Bereitschaftsposition neben einer Unterseite (8d) der Hubplattform (8a, 8b) angeordnet ist und hierbei vorzugsweise in eine an der Unterseite (8d) ausgebildete Öffnung (8f) hineinragt, wenn die Hubplattform (8a, 8b) in die Transportstellung abgesenkt ist.

4. Transportfahrzeug (1) nach einem der Ansprüche 1 bis 3, **dadurch gekennzeichnet, dass** die erste Abstellfläche (2a) und die zweite Abstellfläche (8e) so zueinander angeordnet sind, dass ein auf der ersten Abstellfläche (2a) abgestellter Container (5) mit seiner Unterseite, insbesondere mit seinen unteren Eckbeschlägen (5a), zwischen den Führungsflächen (2c) in einer vorzugsweise horizontalen ersten Ebene (E1) positioniert ist und ein auf der zweiten Abstellfläche (8e) abgestellter Container (5) mit seiner Unterseite, insbesondere mit seinen unteren Eckbeschlägen (5a), zwischen den Führungsflächen (2c) in einer vorzugsweise horizontalen zweiten Ebene (E2) positioniert ist, die zweite Ebene (E2) oberhalb der ersten Ebene (E1) angeordnet ist und in der zweiten Ebene (E2) die Führungsflächen (2c) mit einem größeren Abstand (d2) voneinander beabstandet sind als in der ersten Ebene (E1).

5. Transportfahrzeug (1) nach einem der Ansprüche 1 bis 4, **dadurch gekennzeichnet, dass** der Adapter (6) in der Betriebsposition unterhalb der Hubplattform (8a, 8b) zwischen der Hubplattform (8a, 8b) und einem Fahrzeugrahmen (2) des Transportfahrzeugs (1) angeordnet und hierbei auf den Fahrzeugrahmen (2) aufgesetzt ist, so dass die Hubplattform (8a, 8b) in der Transportstellung auf dem Adapter (6) abstellbar ist.

6. Transportfahrzeug (1) nach einem der Ansprüche 1 bis 5, **dadurch gekennzeichnet, dass** der Adapter (6) plattenförmig ausgebildet ist und eine ebene Oberseite (6c) sowie gegenüberliegend eine hierzu parallel verlaufende ebene Unterseite (6b) aufweist, und dass in der Betriebsposition die der Hubplattform (8a, 8b) zugewandte Oberseite (6c) und die einer Oberseite (2d) eines Fahrzeugrahmens (2) zugewandte Unterseite (6b) horizontal ausgerichtet sind.

7. Transportfahrzeug (1) nach einem der Ansprüche 1 bis 6, **dadurch gekennzeichnet, dass** zwei Adapter (6) vorgesehen sind, die ausgehend von ihrer Bereitschaftsposition voneinander weggerichtet in die Betriebsposition, insbesondere quer zu einer Längsrichtung (L) des Transportfahrzeugs (1), beweglich gelagert sind.

8. Transportfahrzeug (1) nach einem der Ansprüche 1 bis 7, **dadurch gekennzeichnet, dass** jeder Adapter (6) über eine Positioniervorrichtung (7) mit einem Positionierantrieb (7b) zwischen der Bereitschaftsposition und der Betriebsposition bewegbar ist, wobei der Positionierantrieb (7b) vorzugsweise als Linearantrieb ausgebildet ist und insbesondere einen Hubzylinder, vorzugsweise Elektrozylinder oder Hydraulikzylinder, oder einen Riementrieb, Kettentrieb oder Ritzel-Zahnstangentrieb umfasst.

9. Transportfahrzeug (1) nach Anspruch 8, **dadurch gekennzeichnet, dass** jeder Adapter (6) an einem Positionierarm (7a) der Positioniervorrichtung (7) angeordnet ist und der Positionierarm (7a) an dem Transportfahrzeug (1) bewegbar, insbesondere schwenkbar, gelagert und mit dem Positionierantrieb (7b) antriebsmäßig verbunden ist, um den Adapter (6) zwischen der Bereitschaftsposition und der Betriebsposition zu bewegen.

10. Verwendung eines Transportfahrzeugs (1) nach einem der Ansprüche 1 bis 9 zum Transport eines als Wide-Body-Container ausgebildeten Containers (5).

## Claims

1. Transport vehicle (1) for containers (5), having a first set-down surface (2a) on which a container (5) can be set down, and having two mutually opposing guide surfaces (2c) which extend towards one another in the direction of the first set-down surface (2a) in order to guide a container (5) during set-down on the transport vehicle (1) in the direction of the first set-down surface (2a), wherein the first set-down surface (2a) is disposed between the guide surfaces (2c) and wherein a lifting platform (8a, 8b) which can be raised and lowered is disposed between the guide surfaces (2c), **characterised in that** an adapter (6) is provided which can be moved between a standby position and an operating position in such a way that a container (5) is guided onto the first set-down surface (2a) during set-down on the transport vehicle (1) when the adapter (6) is in the standby position and the lifting platform (8a, 8b) is lowered to a transport position, and is guided onto a second set-down surface (8e) which is formed by the lifting platform (8a, 8b) when the adapter (6) is placed onto the transport vehicle (1) in the operating position and in this connection the lifting platform (8a, 8b) in the transport position is placed via the adapter (6) onto the transport vehicle (1).

2. Transport vehicle (1) as claimed in claim 1, **characterised in that** the adapter (6) is movably mounted on the transport vehicle (1) between the standby position and the operating position.

3. Transport vehicle (1) as claimed in claim 1 or 2, **characterised in that** in the standby position the adapter (6) is disposed next to a lower side (8d) of the lifting platform (8a, 8b) and in this connection protrudes preferably into an opening (8f) formed on the lower side (8d) when the lifting platform (8a, 8b) is lowered to the transport position.

4. Transport vehicle (1) as claimed in any one of claims 1 to 3, **characterised in that** the first set-down surface (2a) and the second set-down surface (8e) are disposed with respect to one another such that a container (5) set down on the first set-down surface (2a) is positioned with its lower side, in particular with its lower corner fittings (5a), between the guide surfaces (2c) in a preferably horizontal first plane (E1) and a container (5) set down on the second set-down surface (8e) is positioned with its lower side, in particular with its lower corner fittings (5a), between the guide surfaces (2c) in a preferably horizontal second plane (E2), the second plane (E2) is disposed above the first plane (E1), and in the second plane (E2), the guide surfaces (2c) are spaced apart at a greater distance (d2) from each other than in the first plane (E1).

5. Transport vehicle (1) as claimed in any one of claims 1 to 4, **characterised in that** the adapter (6) in the operating position is disposed below the lifting platform (8a, 8b) between the lifting platform (8a, 8b) and a vehicle frame (2) of the transport vehicle (1) and in this connection is placed onto the vehicle frame (2) so that the lifting platform (8a, 8b) in the transport position can be set down on the adapter (6).

6. Transport vehicle (1) as claimed in any one of claims 1 to 5, **characterised in that** the adapter (6) is plate-like and has a planar upper side (6c) and, opposite thereto, a planar lower side (6b) extending in parallel therewith, and that in the operating position the upper side (6c) facing the lifting platform (8a, 8b) and the lower side (6b) facing an upper side (2d) of a vehicle frame (2) are horizontally orientated.

7. Transport vehicle (1) as claimed in any one of claims 1 to 6, **characterised in that** two adapters (6) are provided which, starting from their standby position, are mounted so as to be movable away from one another to the operating position, in particular transversely to a longitudinal direction (L) of the transport vehicle (1).

8. Transport vehicle (1) as claimed in any one of claims 1 to 7, **characterised in that** each adapter (6) can be moved by means of a positioning device (7) with a positioning drive (7b) between the standby position and the operating position, wherein the positioning drive (7b) is preferably designed as a linear drive and in particular includes a lifting cylinder, preferably an electric cylinder or hydraulic cylinder, or a belt drive, chain drive or rack-and-pinion drive.

9. Transport vehicle (1) as claimed in claim 8, **characterised in that** each adapter (6) is disposed on a positioning arm (7a) of the positioning device (7) and the positioning arm (7a) is mounted on the transport vehicle (1) in a movable, in particular pivotable, manner and is drivingly connected to the positioning drive (7b) in order to move the adapter (6) between the standby position and the operating position.

10. Use of a transport vehicle (1) as claimed in any one of claims 1 to 9 for transportation of a container (5) designed as a wide-body container.

## Revendications

1. Véhicule de transport (1) destiné à des conteneurs (5), ledit véhicule comportant une première surface de placement (2a) sur laquelle un conteneur (5) peut être placée, et deux surfaces de guidage opposées (2c) qui s'étendent en direction de la première surface de placement (2a) en étant dirigées l'une vers l'autre pour guider un conteneur (5) lors du placement sur le véhicule de transport (1) en direction de la première surface de placement (2a), la première surface de placement (2a) étant disposée entre les surfaces de guidage (2c), et une plate-forme élévatrice (8a, 8b) qui peut être levée et abaissée étant disposée entre les surfaces de guidage (2c), **caractérisé en ce qu'**un adaptateur (6) est prévu, lequel peut être déplacé entre une position d'attente et une position de fonctionnement de façon à guider un conteneur (5) pour l'amener sur la première surface de placement (2a) lors du placement sur le véhicule de transport (1) lorsque l'adaptateur (6) est en position d'attente et que la plate-forme élévatrice (8a, 8b) est abaissée dans une position de transport, et pour l'amener sur une deuxième surface de placement (8e) formée par la plate-forme élévatrice (8a, 8b) lorsque l'adaptateur (6) est placé en position de fonctionnement sur le véhicule de transport (1) et la plate-forme élévatrice (8a, 8b) en position de transport étant alors placée sur le véhicule de transport (1) au-dessus de l'adaptateur (6).

2. Véhicule de transport (1) selon la revendication 1, **caractérisé en ce que** l'adaptateur (6) est monté sur le véhicule de transport (1) de manière mobile entre la position d'attente et la position de fonctionnement.

3. Véhicule de transport (1) selon la revendication 1 ou 2, **caractérisé en ce que** l'adaptateur (6) en position d'attente est disposé à côté d'une face inférieure (8d) de la plate-forme élévatrice (8a, 8b) et fait alors saillie de préférence dans une ouverture (8f) ménagée sur la face inférieure lorsque la plate-forme élévatrice (8a, 8b) est abaissée dans la position de transport.

4. Véhicule de transport (1) selon l'une des revendications 1 à 3, **caractérisé en ce que** la première surface de placement (2a) et la deuxième surface de placement (8e) sont disposées l'une par rapport à l'autre de telle sorte qu'un conteneur (5), placé sur la première surface de placement (2a), est positionné avec sa face inférieure, en particulier avec ses cornières inférieures (5a), entre les surfaces de guidage (2c) dans un premier plan (E1) de préférence horizontal et un conteneur (5) placé sur la deuxième surface de placement (8e) est positionné avec sa face inférieure, en particulier avec ses cornières inférieures (5a), entre les surfaces de guidage (2c) dans un deuxième plan (E2) de préférence horizontal, le deuxième plan (E2) étant disposé au-dessus du premier plan (E1) et, dans le deuxième plan (E2) les surfaces de guidage (2c) étant espacées avec une plus grande distance (d2) que dans le premier plan (E1).

5. Véhicule de transport (1) selon l'une des revendications 1 à 4, **caractérisé en ce que** l'adaptateur (6) en position de fonctionnement est disposé sous la plate-forme élévatrice (8a, 8b) entre la plate-forme élévatrice (8a, 8b) et le châssis (2) du véhicule de transport (1) et est alors placé sur le châssis (2) du véhicule de sorte que la plate-forme élévatrice (8a, 8b) en position de transport peut être placée sur l'adaptateur (6).

6. Véhicule de transport (1) selon l'une des revendications 1 à 5, **caractérisé en ce que** l'adaptateur (6) est en forme de plaque et comporte une face supérieure plane (6c) et à l'opposé une face inférieure plane (6b) s'étendant parallèlement à celle-ci, et **en ce que**, dans la position de fonctionnement, la face supérieure (6c) dirigée vers la plate-forme élévatrice (8a, 8b) et la face inférieure (6b) dirigée vers une face supérieure (2d) d'un châssis de véhicule (2)) sont orientées horizontalement.

7. Véhicule de transport (1) selon l'une des revendications 1 à 6, **caractérisé en ce qu'**il est prévu deux adaptateurs (6) qui sont orientés à l'opposé l'un de l'autre depuis leur position d'attente et sont montés de manière mobile jusque dans la position de travail, notamment transversalement à une direction longitudinale (L) du véhicule de transport (1).

8. Véhicule de transport (1) selon l'une des revendications 1 à 7, **caractérisé en ce que** chaque adaptateur (6) peut être déplacé, par le biais d'un dispositif de positionnement (7) muni d'un entraînement de positionnement (7b), entre la position d'attente et la position de fonctionnement, l'entraînement de positionnement (7b) étant de préférence conçu comme un entraînement linéaire et comprenant en particulier un vérin de levage, de préférence un vérin électrique ou un vérin hydraulique, ou un entraînement par courroie, un entraînement par chaîne ou un entraînement par pignon et crémaillère.

9. Véhicule de transport (1) selon la revendication 8, **caractérisé en ce que** chaque adaptateur (6) est disposé sur un bras de positionnement (7a) du dispositif de positionnement (7) et le bras de positionnement (7a) est monté de manière mobile, en particulier pivotante, sur le véhicule de transport (1) et est relié en entraînement à l'entraînement de positionnement (7b) pour déplacer l'adaptateur (6) entre la position d'attente et la position de fonctionnement.

10. Utilisation d'un véhicule de transport (1) selon l'une des revendications 1 à 9 pour transporter un conteneur (5) conçu comme un conteneur à caisse large.
